# EUROPÄISCHE PATENTANMELDUNG

(11) **EP 2 551 559 A1**
(43) Veröffentlichungstag der Anmeldung: **30.01.2013**
(21) Anmeldenummer: 11006274.2
(22) Anmeldetag: 29.07.2011
(51) Int. Cl.: F16J 3/04, F16D 3/84, F16L 13/00, F16L 47/22

(54) **Klemmenlos dichtend angebundener Anschlusskörper**

(71) Anmelder: Firma Carl Freudenberg, 69469 Weinheim (DE); ThyssenKrupp Presta AG, 9492 Eschen (LI)
(72) Erfinder: Nahrwold, Olaf, 67071 Ludwigshafen (DE); Schirmer, Stefan, 31275 Lehrte (DE); Knorr, Rainer, 10557 Berlin (DE); Ziegler, Christian, 73728 Esslingen (DE); Birkwald, Frank, 73760 Ostfildern (DE); Blaszyk, Frank, 74321 Bietigheim-Bissingen (DE)

(57) **Zusammenfassung**

Eine Anordnung, umfassend ein Aufnahmeteil (1) und einen Anschlusskörper (2), wobei der Anschlusskörper (2) einen Grundkörper (3) aufweist, wobei der Grundkörper (3) mit dem Aufnahmeteil (1) verbunden ist, wobei der Grundkörper (3) eine Innenfläche (5) aufweist, welche an einer Außenfläche (6) des Aufnahmeteils (1) anliegt, wobei der Grundkörper (3) ein thermoplastisches Elastomer umfasst und wobei das thermoplastische Elastomer mit der Außenfläche (6) des Aufnahmeteils (1) verbunden ist, ist im Hinblick auf die Aufgabe, eine Anordnung zur Verbindung eines Aufnahmeteils mit einem Anschlusskörper anzugeben, wobei auf Klemmen oder Bänder verzichtet werden kann und wobei eine aufwendige Bearbeitung der Außenfläche des Aufnahmeteils nicht notwendig ist, dadurch gekennzeichnet, dass die Außenfläche (6) derart rauh ausgebildet ist, dass das thermoplastische Elastomer nach Erweichen und Erkalten einen Formschluss und/ oder eine adhäsive Bindung mit der Außenfläche (6) eingeht.

## Beschreibung

### Technisches Gebiet

Die Erfindung betrifft eine Anordnung gemäß dem Oberbegriff des Patentanspruchs 1.

### Stand der Technik

In der US 2007/0178978 A1 wird eine Faltenbalganordnung gezeigt, die mit Klemmbereichen an Anbindungspunkten versehen ist und auf das Aufnahmeteil eines Lenkgetriebes gepresst wird. Bei der genannten Anordnung ist nachteilig, dass in den Endbereichen des Faltenbalgs ein Verstärkungselement aufgebracht werden muss, welches die notwendige Vorspannung über den kompletten Temperaturbereich einer Anwendung im Automotive-Bereich bereitstellen und die Klemmfunktion mit der korrespondierenden Fläche des Aufnahmeteils erhalten muss. Zumal die Verstärkungselemente die Herstellung des Bauteils verteuern.

Aus der DE 102 11 881 A1 ist eine Anordnung bekannt, bei der ein Aufnahmeteil mit einer schwalbenschwanzförmigen Nut versehen ist. In dieser Nut ist ein thermoplastisches Elastomer eines Faltenbalgs formschlüssig aufgenommen.

Das thermoplastische Elastomer des Faltenbalgs wird derart erwärmt, dass es in die schwalbenschwanzförmige Nut hineinfließt und nach Erkalten mit dieser einen Formschluss eingeht.

Bei der genannten Anordnung ist nachteilig, dass die Außenfläche des Aufnahmeteils mit einer schwalbenschwanzförmigen Nut versehen werden muss. Hierzu ist bei metallischen Aufnahmeteilen eine spanende Bearbeitung notwendig. Das Einbringen der schwalbenschwanzförmigen Nut erfordert zusätzliche Arbeitsschritte und erzeugt daher Kosten.

Des Weiteren ist nachteilig, dass das Aufnahmeteil eine bestimmte Wandstärke aufweisen muss, um eine schwalbenschwanzförmige Nut mit definierter Tiefe aufnehmen zu können. Eine relativ hohe Wandstärke führt jedoch zu einem hohen Gewicht der Anordnung. Des Weiteren benötigt diese mit zunehmender Wandstärke des Aufnahmeteils mehr Bauraum.

Sobald ein Aufnahmeteil mit relativer geringer Wandstärke mit einem Anschlusskörper, beispielsweise einem Balg oder Schlauch, verbunden werden soll, müssen Klemmen oder Bänder eingesetzt werden. Bei der Verwendung thermoplastischer Elastomere werden derzeit Ohrklemmen, Schraubschellen, Multi-Crimp-Ringe oder Kabelbinder verwendet.

Durch eine Klemmung werden Spannungen in dem Material erzeugt, aus dem der Anschlusskörper gefertigt ist. Diese Spannungen sind zwar notwendig, um eine notwendige Abdichtung herzustellen, führen jedoch zu einem Kriechen oder Setzen der eingesetzten polymeren Werkstoffe.

Hierdurch können während des Betriebs die notwendigen Spannungen an den Dichtstellen zum Teil erheblich geschwächt werden. Es besteht die Gefahr, dass eine Dichtung nicht mehr gewährleistet ist. Es besteht weiter die Gefahr, dass sich die Klemmen komplett lösen und der Anschlusskörper vom Aufnahmeteil abrutschen kann.

Die zuvor genannten technischen Probleme treten insbesondere an Lenkgetrieben auf, an denen Faltenbälge festgelegt sind.

Die derzeit eingesetzten Klemmen nehmen vergleichsweise viel Platz in Anspruch und weisen im Verhältnis zum Anschlusskörper ein relativ hohes Gewicht auf. Überdies sind Klemmen relativ teuer und verursachen einen erheblichen Aufwand bei der Beschaffung, Lagerung, Transport und Montage.

### Darstellung der Erfindung

Der Erfindung liegt daher die Aufgabe zugrunde, eine Anordnung zur Verbindung eines Aufnahmeteils mit einem Anschlusskörper anzugeben, wobei auf Klemmen oder Bänder verzichtet werden kann und wobei eine aufwendige Bearbeitung der Außenfläche des Aufnahmeteils nicht notwendig ist.

Erfindungsgemäß wird die voranstehende Aufgabe mit den Merkmalen des Patentanspruchs 1 gelöst.

Erfindungsgemäß ist erkannt worden, dass ein Formschluss zwischen einem Aufnahmeteil und einem Anschlusskörper nicht nur durch makroskopische Strukturen, wie beispielsweise Nuten, sondern auch durch mikroskopische Strukturen hergestellt werden kann. In Versuchen konnte überraschenderweise festgestellt werden, dass bei geeigneter Werkstoffwahl bzw. Modifikation des Werkstoffs und ausreichender Erwärmung ein zusätzlicher adhäsiver Effekt auftritt. Dieser adhäsive Effekt entspricht einer Klebung, jedoch ohne Kleber. Konkret ist hierbei erkannt worden, dass allein die Rauhigkeit einer unbearbeiteten Außenfläche eines Aufnahmeteils ausreichend sein kann, um einen Formschluss mit einem thermoplastischen Elastomer einzugehen. Neben oder alternativ zum Formschluss treten auch adhäsive Effekte auf, welche die dichtende Anbindung des Anschlusskörpers begünstigen. Insbesondere wird die Wirkfläche für adhäsive Effekte durch die Rauhigkeit vergrößert.

Vor diesem Hintergrund ist beispielsweise denkbar, dass tiefgezogene, druck- oder sandgegossene Aufnahmeteile mit einem thermoplastischen Elastomer formschlüssig verbunden werden. Weiter ist erkannt worden, dass unter Ausnutzung der charakteristischen Rauhigkeit eines Aufnahmeteils auf Bänder oder Klemmen verzichtet werden kann. Insoweit werden Spannungen im Anschlusskörper erheblich reduziert bzw. gar nicht mehr eingebracht. Durch den Wegfall der Klemmen oder Bänder werden Gewicht, Bauraum und Kosten eingespart.

Folglich ist die eingangs genannte Aufgabe gelöst.

Die Außenfläche könnte eine Rauhigkeit im Bereich RZ 10 µm bis 250 µm aufweisen. Überraschend hat sich gezeigt, dass ein Aufnahmeteil mit einer Rauhigkeit innerhalb dieses Bereichs mit einem thermoplastischen Elastomer einen sehr stabilen Formschluss und/ oder eine adhäsive Bindung eingeht. Die Verbindung zwischen Aufnahmeteil und Anschlusskörper ist derart fest, dass der Anschlusskörper erheblichen Zugkräften Stand hält.

Zwischen dem thermoplastischen Elastomer und der Außenfläche könnte keine stoffschlüssige Verbindung durch zusätzlichen Klebstoff bestehen. Hierdurch ist sichergestellt, dass eine formschlüssig Verbindung zwischen Aufnahmeteil und Anschlusskörper ohne den Einsatz von zusätzlichen Klebern hergestellt werden kann. Allein die dem thermoplastischen Elastomer bereits innewohnenden Stoffe werden zur Anbindung genutzt. Insoweit ist eine umweltfreundliche Produktion der genannten Anordnung ermöglicht.

Vor diesem Hintergrund könnte die Außenfläche in dem Bereich, in dem sie mit dem thermoplastischen Elastomer verbunden ist, keine spanende Bearbeitung erfahren haben. Insbesondere kann auf Nuten, Einfräsungen, Abkantungen oder makroskopische Hinterschnitte verzichtet werden. So können Aufnahmeteile eingesetzt werden, die nur eine geringe Wandstärke aufweisen. Die Wandstärke der Aufnahmeteile muss keine bestimmte Tiefe aufweisen, um Nuten aufzunehmen. Die Außenfläche der Aufnahmeteile muss lediglich eine bestimmte Rauhigkeit zeigen, um mit einem thermoplastischen Elastomer einen Formschluss oder eine adhäsive Bindung eingehen zu können.

Der Anschlusskörper könnte fluiddicht an der Außenfläche angebunden sein. Überraschend ist erkannt worden, dass ein thermoplastisches Elastomer mit der rauhen Struktur einer Außenfläche derart verbindbar ist, dass ein flüssigkeits- und/ oder gasdichter Abschluss des Inneren des Anschlusskörpers ermöglicht ist.

Der Formschluss und/ oder die adhäsive Bindung des thermoplastischen Elastomers mit der Außenfläche könnten durch Anschmelzen und anschließendes Erstarren des thermoplastischen Elastomers hergestellt sein. Durch diese konkrete Ausgestaltung können der Grundkörper des Anschlusskörpers bzw. das Aufnahmeteil derart erwärmt werden, dass das thermoplastische Elastomer, aus welchem der Grundkörper zumindest teilweise gefertigt ist, schmilzt. Die geschmolzenen Bereiche des thermoplastischen Elastomers können dann in die rauhen Strukturen der Außenfläche des Aufnahmeteils eindringen und diese hinterfließen. Beim Erkalten des thermoplastischen Elastomers bildet sich dann ein Formschluss und/ oder eine adhäsive Bindung, welcher bzw. welche das Aufnahmeteil fest und fluiddicht mit dem Grundkörper verbindet bzw. verbinden.

Vor diesem Hintergrund könnte der Anschlusskörper als Faltenbalg ausgestaltet sein. Ein Faltenbalg ist in axialer Richtung problemlos stauchbar oder dehnbar. Überdies finden Faltenbälge in einer Vielzahl von Kupplungen, Gelenken und Lenkgetrieben Anwendung.

Der Anschlusskörper könnte als Schlauch ausgestaltet sein. Schläuche können in Luftführungen oder Hydraulikanlagen von Motoren Verwendung finden.

Besonders vorteilhaft ist die Verwendung einer hier beschriebenen Anordnung in einem Lenkgetriebe, da eine fluid- und staubdichte Abgrenzung gegenüber der Umgebung möglich ist. Dies ist bei Minimierung der Kosten und des Bauraums möglich.

Ein Verfahren zur Herstellung einer Anordnung der hier beschriebenen Art könnte die folgenden Schritte umfassen:
Bereitstellen eines Aufnahmeteils und eines Anschlusskörpers mit einem Grundkörper, Aufbringen des Grundkörpers auf das Aufnahmeteil, Erwärmen des Grundkörpers, so dass dessen thermoplastisches Elastomer erweicht wird und in rauhe Strukturen der Außenfläche des Aufnahmeteils eindringen kann, Erkalten des thermoplastischen Elastomers, so dass das sich in den rauhen Strukturen befindliche thermoplastische Elastomer erstarrt und einen Formschluss und/ oder eine adhäsive Bindung mit der Außenfläche eingeht.

Die Erwärmung des Grundkörpers könnte über die Außenfläche von innen her erfolgen. Hierbei ist denkbar, dass die Prozesswärme durch elektrische Induktion in ein metallisches Aufnahmeteil eingebracht wird, um das thermoplastische Elastomer anzuschmelzen.

Die Erwärmung des Grundkörpers könnte über der Vicat-Erweichungstemperatur jedoch unterhalb der Zersetzungstemperatur des thermoplastischen Elastomers erfolgen. Das Einbringen der Prozesswärme kann durch Wärmestrahlung, insbesondere durch Strahler oder Heizspiegel, erfolgen. Hierdurch kann das thermoplastische Elastomer, aus welchem der Grundkörper teilweise gefertigt ist, angeschmolzen werden.

Die Erwärmung des Grundkörpers könnte bei einer Temperatur erfolgen, die im Bereich der Zersetzungstemperatur des thermoplastischen Elastomers liegt.

Der Grundkörper könnte radial von außen gegen die Außenfläche gedrückt werden, um den Formschluss und/ oder die adhäsive Bindung herzustellen. Nach dem Aufbringen des Grundkörpers auf das Aufnahmeteil kann der Grundkörper in radialer Richtung auf das Aufnahmeteil aufgepresst werden. Vor diesem Hintergrund ist denkbar, dass das Aufbringen des Grundkörpers auf das Aufnahmeteil durch Aufziehen des Grundkörpers erfolgt.

Das Aufnahmeteil und der Anschlusskörper könnten derart überlappt werden, dass eine daraus entstehende Vorspannung zur Herstellung des Formschlusses und/ oder der adhäsiven Bindung ausreicht. Hierbei ist konkret denkbar, dass der Innendurchmesser des Grundkörpers im Bereich des Außendurchmessers des Aufnahmeteils liegt. Es könnte eine Spielpassung bis Übermaß gegeben sein.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung eines bevorzugten Ausführungsbeispiels der erfindungsgemäßen Anordnung anhand der Zeichnung zu verweisen.

In Verbindung mit der Erläuterung des bevorzugten Ausführungsbeispiels anhand der Zeichnung werden auch im Allgemeinen bevorzugte Ausgestaltungen und Weiterbildungen der Lehre erläutert.

### Kurzbeschreibung der Zeichnung

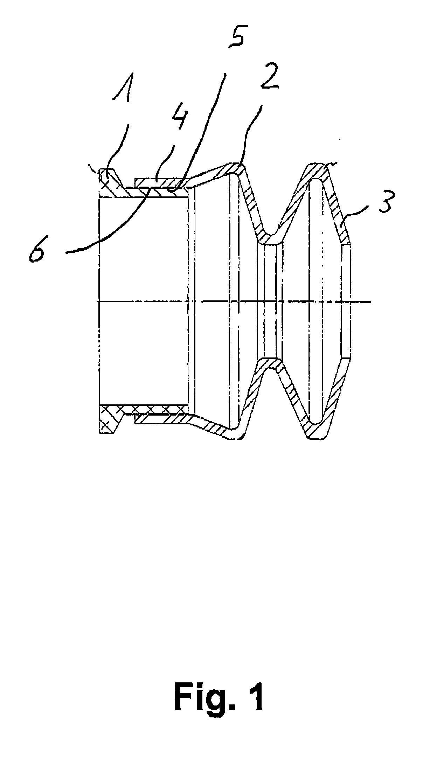

In der Zeichnung zeigt
- Fig. 1: eine Anordnung, bei welcher ein Faltenbalg mit einem zylindrischen Aufnahmeteil allein durch Formschluss und/ oder adhäsive Bindung zwischen dem thermoplastischen Elastomer des Faltenbalgs und der Außenfläche des Aufnahmeteils verbunden ist.

### Ausführung der Erfindung

Fig. 1 zeigt eine Anordnung, umfassend ein Aufnahmeteil 1 und einen Anschlusskörper 2, wobei der Anschlusskörper 2 einen Grundkörper 3 mit einem offenen, zylindrischen Bund 4 aufweist, wobei der Bund 4 mit dem Aufnahmeteil 1 verbunden ist, wobei der Bund 4 eine Innenfläche 5 aufweist, welche an einer Außenfläche 6 des Aufnahmeteils 1 anliegt, wobei der Grundkörper 3 ein thermoplastisches Elastomer umfasst und wobei das thermoplastische Elastomer mit der Außenfläche 6 des Aufnahmeteils 1 verbunden ist.

Insoweit umfasst die Anordnung ein Aufnahmeteil 1 und einen Anschlusskörper 2, wobei der Anschlusskörper 2 einen Grundkörper 3 aufweist, wobei der Grundkörper 3 mit dem Aufnahmeteil 1 verbunden ist, wobei der Grundkörper 3 eine Innenfläche 5 aufweist, welche an einer Außenfläche 6 des Aufnahmeteils 1 anliegt, wobei der Grundkörper 3 ein thermoplastisches Elastomer umfasst und wobei das thermoplastische Elastomer mit der Außenfläche 6 des Aufnahmeteils 1 verbunden ist.

Die Außenfläche 6 ist derart rauh ausgebildet, dass das thermoplastische Elastomer nach Erweichen und Erkalten einen Formschluss und/ oder eine adhäsive Bindung mit der Außenfläche 6 eingeht.

Die Außenfläche 6 weist eine Rauhigkeit im Bereich RZ 10 µm bis 250 µm auf.

Die Außenfläche 6 ist vorzugsweise nicht spanend bearbeitet. Eine spanende Bearbeitung zum Erreichen der erforderlichen Rauhigkeit ist jedoch nicht ausgeschlossen. Beispielsweise kann ein Grobschleifprozess oder Rändeln durchgeführt werden.

Das Aufnahmeteil 1 ist als zylindrisches Bauteil ausgestaltet. Es kann beispielsweise als tiefgezogenes Bauteil, druckgegossenes oder als sandgegossenes Bauteil ausgestaltet sein. Es ist so ein mikroskopischer Formschluss mit dem thermoplastischen Elastomer möglich.

Zwischen dem thermoplastischen Elastomer und der Außenfläche 6 besteht keine stoffschlüssige Verbindung durch einen zusätzlichen Klebstoff. Die Außenfläche 6 hat in dem Bereich, in dem sie mit dem thermoplastischen Elastomer verbunden ist, vorzugsweise keine spanende Bearbeitung erfahren.

Der Anschlusskörper 2 ist fluiddicht an der Außenfläche 6 angebunden.

Der Formschluss und/ oder die adhäsive Bindung des thermoplastischen Elastomers mit der Außenfläche 6 sind durch Anschmelzen und anschließendes Erstarren des thermoplastischen Elastomers hergestellt.

Das thermoplastische Elastomer wird bevorzugt aus den Werkstofffamilien TPC-EE und TPV ausgewählt. TPC-EE steht für "Thermoplastic Copolymer Ether Ester". TPV steht für "Thermoplastisches Vulkanisat", im allgemeinen ist ein Polypropylen-EPDM Gemisch mit hoch vernetzter EPDM- Phase gemeint. EPDM steht für Ethylen-Propylen-Dien-Kautschuk.

Der Anschlusskörper 2 ist als Faltenbalg ausgestaltet und weist mehrere Falten auf. Der Anschlusskörper 2 ist in axialer Richtung stauchbar.

Die Anordnung gemäß Fig. 1 wurde durch ein Verfahren hergestellt, welches die nachfolgenden Schritte umfasst:
Bereitstellen eines Aufnahmeteils 1 und eines Anschlusskörpers 2 mit einem Grundkörper 3, Aufbringen des Grundkörpers 3 auf das Aufnahmeteil 1, Erwärmen des Grundkörpers 3, so dass dessen thermoplastisches Elastomer erweicht wird und in rauhe Strukturen der Außenfläche 6 des Aufnahmeteils 1 eindringen kann, Erkalten des thermoplastischen Elastomers, so dass das sich in den rauhen Strukturen befindliche thermoplastische Elastomer erstarrt und einen Formschluss und/ oder eine adhäsive Bindung mit diesen eingeht.

Die Erwärmung des Grundkörpers 3 erfolgt über die Außenfläche 6 von innen her. Die Erwärmung des Grundkörpers 3 erfolgt über der Vicat-Erweichungstemperatur jedoch unterhalb der Zersetzungstemperatur des thermoplastischen Elastomers.

Die Erwärmung des Grundkörpers 3 kann bei einer Temperatur erfolgen, die im Bereich der Zersetzungstemperatur des thermoplastischen Elastomers liegt. Der Grundkörper 3 wird radial von außen gegen die Außenfläche 6 gedrückt, um den Formschluss und/ oder die adhäsive Bindung herzustellen.

Das Aufnahmeteil 1 und der Anschlusskörper 2 überlappen derart, dass eine daraus entstehende Vorspannung zur Herstellung des Formschlusses und/oder der adhäsiven Bindung ausreicht.

Die Anordnung gemäß Fig. 1 wurde konkret durch ein Verfahren hergestellt, welches die nachfolgenden Schritte umfasst:
Bereitstellen des Aufnahmeteils 1 und des Anschlusskörpers 2 mit einem Bund 4, Aufbringen des Bunds 4 auf das Aufnahmeteil 1, Erwärmen des Bunds 4 sodass dessen thermoplastisches Elastomer erweicht wird, und in rauhe Strukturen der Außenfläche 6 des Aufnahmeteils 1 eindringen kann und Erkalten des thermoplastischen Elastomers, sodass das sich in den rauhen Strukturen befindliche thermoplastische Elastomer erstarrt und einen Formschluss und/ oder eine adhäsive Bindung mit diesen eingeht.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

## Patentansprüche

1. Anordnung, umfassend ein Aufnahmeteil (1) und einen Anschlusskörper (2), wobei der Anschlusskörper (2) einen Grundkörper (3) aufweist, wobei der Grundkörper (3) mit dem Aufnahmeteil (1) verbunden ist, wobei der Grundkörper (3) eine Innenfläche (5) aufweist, welche an einer Außenfläche (6) des Aufnahmeteils (1) anliegt, wobei der Grundkörper (3) ein thermoplastisches Elastomer umfasst und wobei das thermoplastische Elastomer mit der Außenfläche (6) des Aufnahmeteils (1) verbunden ist,
**dadurch gekennzeichnet, dass** die Außenfläche (6) derart rauh ausgebildet ist, dass das thermoplastische Elastomer nach Erweichen und Erkalten einen Formschluss und/ oder eine adhäsive Bindung mit der Außenfläche (6) eingeht.

2. Anordnung nach Anspruch 1, **dadurch gekennzeichnet, dass** die Außenfläche (6) eine Rauhigkeit im Bereich RZ 10 µm bis 250 µm aufweist.

3. Anordnung nach Anspruch 1 oder 2, **dadurch gekennzeichnet, dass** zwischen dem thermoplastischen Elastomer und der Außenfläche (6) keine stoffschlüssige Verbindung durch zusätzlichen Klebstoff besteht.

4. Anordnung nach einem der Ansprüche 1 bis 3, **dadurch gekennzeichnet, dass** die Außenfläche (6) in dem Bereich, in dem sie mit dem thermoplastischen Elastomer verbunden ist, keine spanende Bearbeitung erfahren hat.

5. Anordnung nach einem der Ansprüche 1 bis 4, **dadurch gekennzeichnet, dass** der Anschlusskörper (2) fluiddicht an der Außenfläche (6) angebunden ist.

6. Anordnung nach einem der Ansprüche 1 bis 5, **dadurch gekennzeichnet, dass** der Formschluss und/ oder die adhäsive Bindung des thermoplastischen Elastomers mit der Außenfläche (6) durch Anschmelzen und anschließendes Erstarren des thermoplastischen Elastomers hergestellt ist.

7. Anordnung nach einem der Ansprüche 1 bis 6, **dadurch gekennzeichnet, dass** der Anschlusskörper (2) als Faltenbalg ausgestaltet ist.

8. Anordnung nach einem der Ansprüche 1 bis 6, **dadurch gekennzeichnet, dass** der Anschlusskörper (2) als Schlauch ausgestaltet ist.

9. Lenkgetriebe, umfassend eine Anordnung nach einem der Ansprüche 1 bis 7.

10. Verfahren zur Herstellung einer Anordnung nach einem der Ansprüche 1 bis 8, umfassend die nachfolgenden Schritte:
Bereitstellen eines Aufnahmeteils (1) und eines Anschlusskörpers (2) mit einem Grundkörper (3), Aufbringen des Grundkörpers (3) auf das Aufnahmeteil (1), Erwärmen des Grundkörpers (3), so dass dessen thermoplastisches Elastomer erweicht wird und in rauhe Strukturen der Außenfläche (6) des Aufnahmeteils (1) eindringen kann, Erkalten des thermoplastischen Elastomers, so dass das sich in den rauhen Strukturen befindliche thermoplastische Elastomer erstarrt und einen Formschluss und/ oder eine adhäsive Bindung mit der Außenfläche (6) eingeht.

11. Verfahren nach Anspruch 10, **dadurch gekennzeichnet, dass** die Erwärmung des Grundkörpers (3) über die Außenfläche (6) von innen her erfolgt.

12. Verfahren nach Anspruch 10 oder 11, **dadurch gekennzeichnet, dass** die Erwärmung des Grundkörpers (3) über der Vicat-Erweichungstemperatur jedoch unterhalb der Zersetzungstemperatur des thermoplastischen Elastomers erfolgt.

13. Verfahren nach Anspruch 10 oder 11, **dadurch gekennzeichnet, dass** die Erwärmung des Grundkörpers (3) bei einer Temperatur erfolgt, die im Bereich der Zersetzungstemperatur des thermoplastischen Elastomers liegt.

14. Verfahren nach einem der Ansprüche 10 bis 13, **dadurch gekennzeichnet, dass** der Grundkörper (3) radial von außen gegen die Außenfläche (6) gedrückt wird, um den Formschluss und/ oder die adhäsive Bindung herzustellen.

15. Verfahren nach einem der Ansprüche 10 bis 14, **dadurch gekennzeichnet, dass** das Aufnahmeteil (1) und der Anschlusskörper (2) derart überlappt werden, dass eine daraus entstehende Vorspannung zur Herstellung des Formschlusses und/ oder der adhäsiven Bindung ausreicht.
